# EUROPÄISCHE PATENTSCHRIFT

(11) **EP 2 363 581 B1**
(45) Veröffentlichungstag und Bekanntmachung des Hinweises auf die Patenterteilung: **29.10.2014**
(21) Anmeldenummer: 11152299.1
(22) Anmeldetag: 27.01.2011
(51) Int. Cl.: F01N 3/00, F01N 3/28, F01N 13/00

(54) **Abgasbehandlungseinrichtung**
Exhaust gas treatment device
Dispositif de traitement des gaz d'échappement

(30) Priorität: 24.02.2010 DE 102010008999
(43) Veröffentlichungstag der Anmeldung: 07.09.2011
(73) Patentinhaber: Eberspächer Exhaust Technology GmbH & Co. KG, 66539 Neunkirchen (DE)
(72) Erfinder: Werni, Marcus, 71334 Waiblingen (DE); Sauer, Andreas, 73054 Eislingen (DE)
(74) Vertreter: BRP Renaud & Partner mbB Rechtsanwälte Patentanwälte Steuerberater

(56) Entgegenhaltungen:
- DE-A1- 2 307 215
- DE-B3-102005 044 494
- US-A- 5 808 245
- US-A1- 2006 157 296
- US-B1- 6 868 670

## Beschreibung

Die vorliegende Erfindung betrifft eine Abgasbehandlungseinrichtung für eine Abgasanlage einer Brennkraftmaschine, insbesondere eines Straßenfahrzeugs.

Abgasbehandlungseinrichtungen, wie z. B. Katalysatoren, Partikelfilter und Schalldämpfer sowie beliebige Kombinationen daraus, umfassen üblicherweise ein Gehäuse, in dem zumindest ein Abgasbehandlungselement, wie z. B. ein Katalysatorelement oder ein Partikelfilterelement, angeordnet ist. Sofern keramische Abgasbehandlungselemente zum Einsatz kommen, werden diese üblicherweise mittels einer Lagermatte im Gehäuse gelagert.

Das Dokument DE 2307215 offenbart eine solche Abgasbehandlungseinrichtung.

Bei bestimmten Einbausituationen, insbesondere bei einer Positionierung der Abgasbehandlungseinrichtung vergleichsweise nahe an einem Endrohr der Abgasanlage, kann es dazu kommen, dass Wasser in das Gehäuse der Abgasbehandlungseinrichtung eintritt. Dabei ist eine Kontaktierung des Wassers mit der Lagermatte zu vermeiden. Ferner kann insbesondere im Betrieb der Abgasanlage eine Kontaktierung des Wassers mit dem jeweiligen Abgasbehandlungselement bzw. mit einem ggf. vorhandenen Sensor, insbesondere einem NOX-Sensor, unerwünscht sein, da bspw. hohe Temperaturdifferenzen zu hohen thermischen Spannungen führen können, die eine Beschädigung des Abgasbehandlungselements bzw. des jeweiligen Sensor verursachen können.

Die vorliegende Erfindung beschäftigt sich mit dem Problem, für eine Abgasbehandlungseinrichtung der eingangs genannten Art eine verbesserte oder zumindest eine andere Ausführungsform anzugeben, die sich insbesondere dadurch auszeichnet, dass die Gefahr einer Kontaktierung der Lagermatte mit Wasser reduziert ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, im Gehäuse einen Separationsboden anzuordnen, der eine Austrittskammer baulich von einer Sammelkammer trennt, wobei im Separationsboden ausgebildete Durchlassöffnungen die Austrittskammer mit der Sammelkammer fluidisch verbinden. Des Weiteren sind am Separationsboden in die Austrittskammer vorstehende Kragen ausgebildet, welche die Durchlassöffnungen einfassen. Durch die vorgeschlagene Bauweise kann Wasser, das über ein mit der Austrittskammer fluidisch verbundenes Austrittsrohr in das Gehäuse eintreten kann, nicht ohne weiteres durch die Durchlassöffnungen des Separationsbodens auch in die Sammelkammer gelangen. Denn die Kragen, welche die Durchlassöffnungen einfassen, bilden Barrieren, die von Wasser nicht ohne weiteres überwunden werden können. Somit kann das über das Austrittsrohr ggf. in das Gehäuse eindringende Wasser zwar bis zur Austrittskammer gelangen, jedoch nicht weiter. Insbesondere gelangt das Wasser dadurch nicht bis zum jeweiligen Abgasbehandlungselement und insbesondere auch nicht bis zur zugehörigen Lagermatte. Auf diese Weise kann die Gefahr einer Kontaktierung der Lagermatte mit in das Gehäuse eindringendem Wasser effektiv reduziert werden.

Entsprechend einer vorteilhaften Ausführungsform kann der Separationsboden zum Austrittsrohr axial fluchtend einen geschlossenen Bereich aufweisen, dessen Fläche größer ist als die Querschnittsfläche des Austrittsrohrs. Hierdurch wird erreicht, dass Wasser, das unmittelbar vom Austrittsrohr in der Axialrichtung abtropft, den geschlossenen Bereich trifft, jedenfalls keine Durchlassöffnung. Somit kann ein Durchtropfen von Wasser, das vom Austrittsrohr direkt abtropft, durch die Durchlassöffnungen hindurch vermieden werden.

Gemäß einer anderen Ausführungsform kann das Austrittsrohr einen sich zur Austrittskammer aufweitenden, im Gehäuse angeordneten Trichter aufweisen bzw. In einen solchen übergehen. Der Trichter reduziert den Strömungswiderstand am Übergang zum Austrittsrohr und führt zu einer Beschleunigung der Abgasströmung.

Bei einer zweckmäßigen Weiterbildung kann nun vorgesehen sein, dass der Separationsboden zum Austrittsrohr axial fluchtend einen geschlossenen Bereich aufweist, dessen Fläche größer ist als die Querschnittsfläche des Trichters an dessen der Austrittskammer zugewandtem Ende. Auf diese Weise kann Wasser, das über das Austrittsrohr in den Trichter gelangt und vom Trichter axial abtropfen kann, nur den geschlossenen Bereich des Separationsbodens treffen und dadurch nicht durch eine der Durchlassöffnungen des Separationsbodens hindurchtropfen.

Bei einer anderen Weiterbildung kann im Bereich des Austrittsrohrs oder im Bereich des Trichters ein Sensor, insbesondere ein NOX-Sensor, am Gehäuse angebracht sein, und zwar derart, dass der Sensor zwischen den Enden des Austrittsrohrs bzw. des Trichters in das Innere des Austrittsrohrs bzw. des Trichters vorsteht. Die Positionierung des Sensors an dieser Stelle ermöglicht bspw. eine zuverlässige Überwachung der Abgasbehandlungseinrichtung.

Gemäß einer besonders vorteilhaften Weiterbildung kann nun vorgesehen sein, den Sensor mittels einer Sensorbuchse am Gehäuse zu befestigen, wobei diese Sensorbuchse eine Gehäusewand und eine Austrittsrohrwand oder eine Trichterwand durchdringt. Durch die Sensorbuchse hindurch ragt der Sensor in das Innere des Austrittsrohrs bzw. des Trichters hinein. Zweckmäßig kann nun diese Sensorbuchse im Inneren des Austrittsrohrs bzw. des Trichters mit einer ringförmig umlaufenden Außennut ausgestattet sein. Sofern an der Innenseite des Austrittsrohrs bzw. des Trichters entlang der Außenrohrwand bzw. der Trichterwand Wasser abfließt, trifft dies nicht direkt auf den Sensor, sondern auf die Sensorbuchse, wodurch die Gefahr einer Kontaminierung des Sensors mit Wasser reduziert ist. Sofern das Wasser entlang der Sensorbuchse weiter in Richtung Sensor fließen möchte, sorgt die optional vorgesehene Außennut dafür, dass sich das Wasser nur bis zur Außennut ausbreiten kann, sich dann darin sammelt und daraus schwerkraftbedingt abtropft. Insoweit wird eine Kontaktierung des Sensors mit Wasser effektiv vermieden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht einer Abgasbehandlungseinrichtung,
- Fig. 2: einen Längsschnitt der Abgasbehandlungseinrichtung entsprechend Schnittlinien II in Fig. 1,
- Fig. 3: einen gegenüber dem Schnitt aus Fig. 2 um 90° gedrehten Längsschnitt entsprechend Schnittlinien III in Fig. 2,
- Fig. 4-7: verschiedene Querschnitte entsprechend Schnittlinien IV bis VII aus Fig. 2,
- Fig. 8: ein Detail VIII aus Fig. 2 in einer vergrößerten Darstellung,
- Fig. 9: ein Detail IX aus Fig. 3 in einer vergrößerten Darstellung.

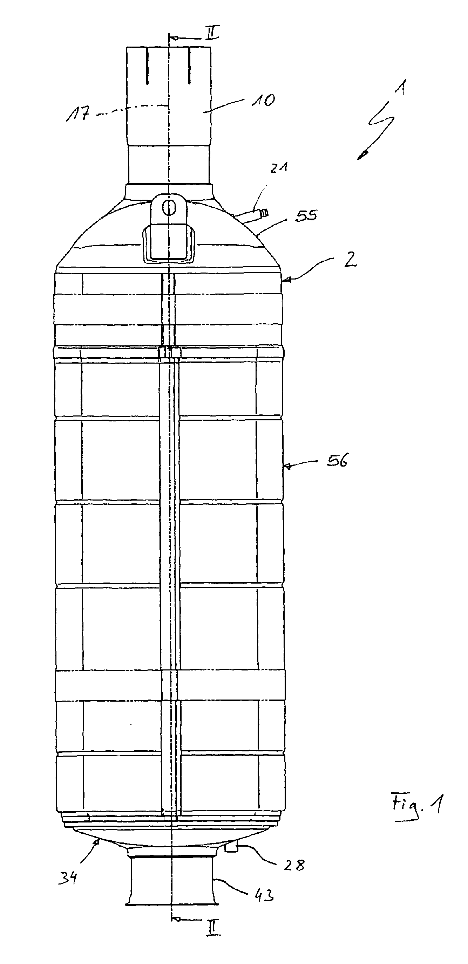

Entsprechend den Figuren 1 bis 5 umfasst eine Abgasbehandlungseinrichtung 1 ein Gehäuse 2 sowie zumindest ein Abgasbehandlungselement 3. Die Abgasbehandlungseinrichtung 1 dient zur Verwendung in einer Abgasanlage einer Brennkraftmaschine, die insbesondere in einem Straßenfahrzeug angeordnet sein kann. Bei der Abgasbehandlungseinrichtung 1 handelt es sich bevorzugt um einen Katalysator oder um ein Partikelfilter, vorzugsweise in Kombination mit einem Schalldämpfer. Als Katalysatoren kommen bevorzugt NOX-Speicherkatalysatoren oder SCR-Katalysatoren in Betracht. Beim Partikelfilter handelt es sich bevorzugt um einen Rußfilter. Dementsprechend handelt es sich bei dem wenigstens einen Abgasbehandlungselement 3 bevorzugt um ein Katalysatorelement, insbesondere um ein NOX-Speicherkatalysatorelement oder um ein SCR-Katalysatorelement, oder um ein Partikelfilterelement, insbesondere um ein Rußfilterelement.

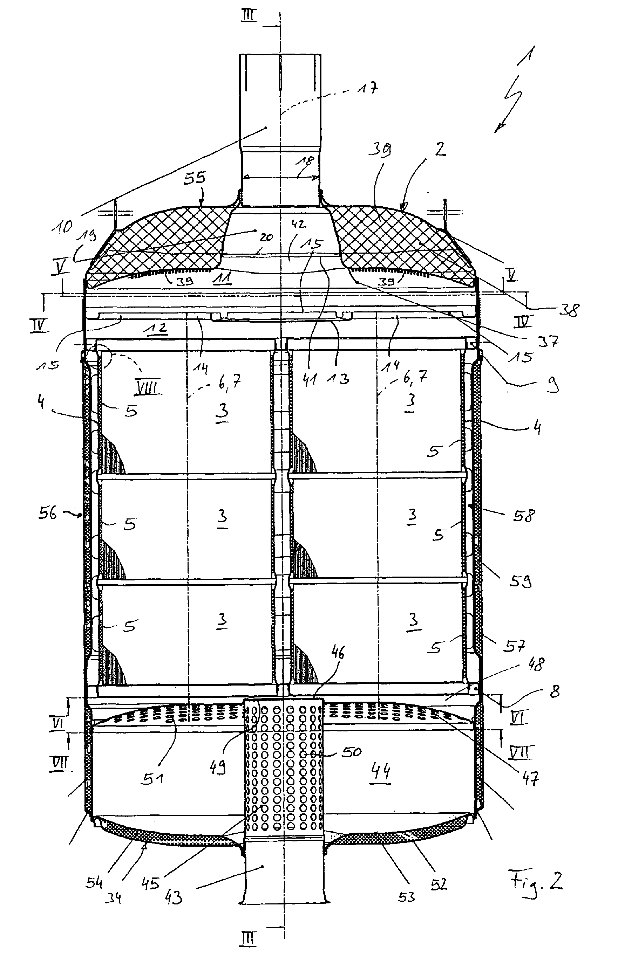

Im gezeigten Beispiel sind gemäß Fig. 2 insgesamt sechs Abgasbehandlungselemente 3 vorgesehen. Diese Anzahl ist jedoch rein exemplarisch und ohne Beschränkung der Allgemeinheit. Im gezeigten Beispiel sind mehrere Abgasbehandlungselemente 3 hintereinander angeordnet, derart, dass sie in Reihe durchströmbar sind. Dabei sind im Beispiel je drei Abgasbehandlungselemente 3 hintereinander angeordnet. Die hintereinander angeordneten Abgasbehandlungselemente 3 können zweckmäßig in einem gemeinsamen Elementeträgerrohr 4 angeordnet sein. Im Beispiel sind zwei derartige Elementeträgerrohre 4 vorgesehen, in denen jeweils drei Abgasbehandlungselemente 3 hintereinander angeordnet sind.

Das jeweilige Abgasbehandlungselement 3 ist im Gehäuse 2 mittels einer Lagermatte 5 gelagert. Sofern wie hier mehrere Abgasbehandlungselemente 3 vorhanden sind, können diese jeweils mit einer eigenen Lagermatte 5 im Gehäuse 2 gelagert sein. Sofern die Abgasbehandlungselemente 3 in wenigstens einem Elementeträgerrohr 4 untergebracht sind, erfolgt die Lagerung mittels der jeweiligen Lagermatte 5 innerhalb des jeweiligen Elementeträgerrohrs 4. Die Lagermatte 5 umhüllt das jeweilige Abgasbehandlungselement 3 bzgl. einer Längsmittelachse 6 des jeweiligen Abgasbehandlungselements 3. Die Längsmittelachse 6 des jeweiligen Abgasbehandlungselements 3 fällt hier mit einer Längsmittelachse 7 des jeweiligen Elementeträgerrohrs 4 zusammen.

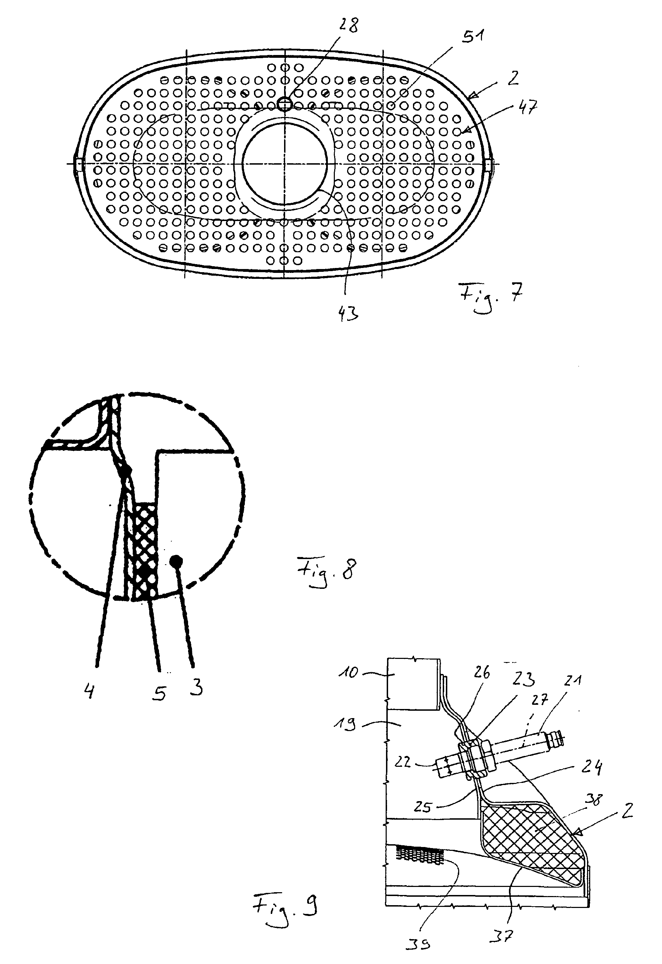

Die vergrößerte Darstellung der Fig. 8 zeigt dabei deutlich, wie das jeweilige Abgasbehandlungselement 3 über die jeweilige Lagermatte 5 am jeweiligen Trägerelementerohr 4 und somit am oder im Gehäuse 2 gelagert ist.

Das jeweilige Elementeträgerrohr 4 ist im wiedergegebenen Ausführungsbeispiel an seinen axialen Enden jeweils über einen Tragboden 8 bzw. 9 im Gehäuse 2 gehalten. Bspw. ist hierzu das jeweilige Elementeträgerrohr 4 in eine entsprechende Aufnahmeöffnung des jeweiligen Tragbodens 8, 9 eingesteckt. Dabei kann das Elementeträgerrohr 4 an dem einen Tragboden 8 bzw. 9 befestigt sein, während es am anderen Tragboden 9 bzw. 8 mittels eines hier nicht näher bezeichneten Schiebesitzes axial verschiebbar gelagert sein kann.

Gemäß Fig. 2 können zumindest zwei Abgasbehandlungselemente 3 nebeneinander angeordnet sein, derart, dass sie parallel durchströmbar sind. Im Beispiel sind zwei Elementeträgerrohre 4 vorgesehen, die nebeneinander angeordnet sind, derart, dass sie parallel durchströmbar sind. Dementsprechend sind hier zwei Gruppen mit jeweils drei in Reihe durchströmbaren Abgasbehandlungselementen 3 nebeneinander und somit parallel durchströmbar angeordnet.

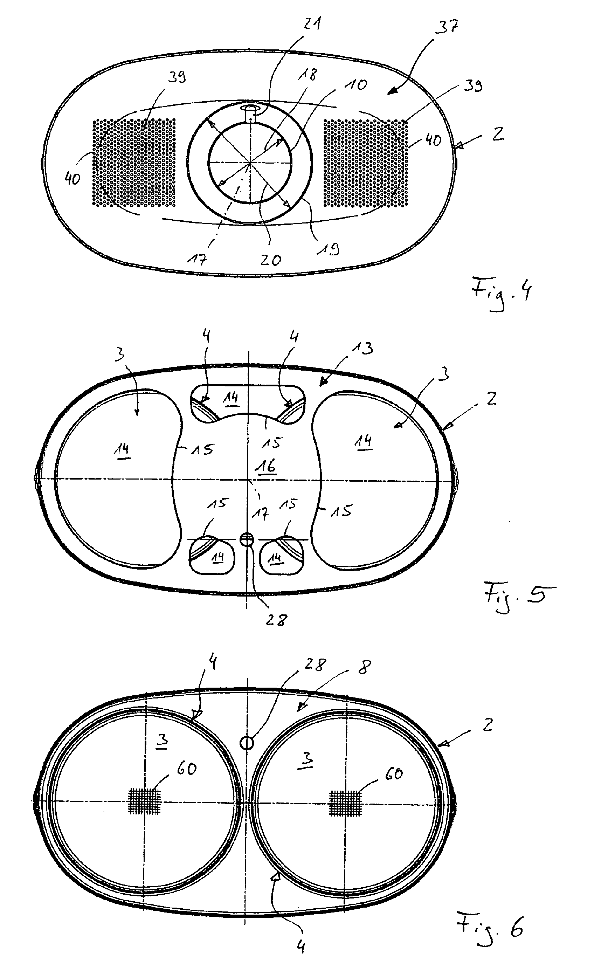

Bei den Abgasbehandlungselementen 3 handelt es sich bevorzugt um Keramikkörper, und zwar insbesondere um monolithische Keramikkörper. In Fig. 6 ist durch eine Kreuzschraffur 60 jeweils eine Porenstruktur der Keramikkörper der Abgasbehandlungselemente 3 angedeutet.

Entsprechend den Figuren 1 bis 3 ist am Gehäuse 2 ein Austrittsrohr 10 vorgesehen, durch das Abgas im Betrieb der Abgasanlage aus dem Gehäuse 2 austreten kann. Im Inneren des Gehäuses 2 ist eine Austrittskammer 11 vorgesehen, die mit dem Austrittsrohr 10 fluidisch verbunden ist. Ferner enthält das Gehäuse 2 eine Sammelkammer 12 sowie einen Separationsboden 13, der die Austrittskammer 11 von der Sammelkammer 12 trennt. Der Separationsboden 13 ist dabei ebenfalls im Inneren des Gehäuses 2 angeordnet. Er ist mit mehreren Durchlassöffnungen 14 ausgestattet, durch die hindurch die Austrittskammer 11 mit der Sammelkammer 12 fluidisch verbunden ist. Des Weiteren ist der Separationsboden 13 je Durchlassöffnung 14 mit einem Ringkragen 15 versehen, der die jeweilige Durchlassöffnung 14 einfasst und der in die Austrittskammer 11 vorsteht. Gemäß Fig. 5 können bspw. fünf Durchlassöffnungen 14 vorgesehen sein, die jeweils von einem Kragen 15 eingefasst sind. Fig. 5 lässt sich weiter entnehmen, dass der Separationsboden 13 zentral einen geschlossenen Bereich 16 aufweist, in dem sich keine Durchlassöffnung 14 befindet. Dieser geschlossene Bereich 16 ist bzgl. einer Axialrichtung, die durch eine Längsmittelachse 17 des Gehäuses 2 definiert ist, fluchtend zum Austrittsrohr 10 angeordnet. Dabei ist der geschlossene Bereich 16 des Separationsbodens 13 so dimensioniert, dass seine Fläche größer ist als eine Querschnittsfläche 18 des Austrittsrohrs 10. Somit liegt eine axiale Projektion der Querschnittsfläche 18 des Austrittsrohrs 10 vollständig innerhalb des geschlossenen Bereichs 16.

Die Längsmittelachs 17 des Gehäuses 2 erstreckt sich hier parallel zu der Längsmittelachse 6 des jeweiligen Abgasbehandlungselements 3 sowie parallel zur Längsmittelachse 7 des gegebenenfalls vorhandenen jeweiligen Elementeträgerrohrs 4.

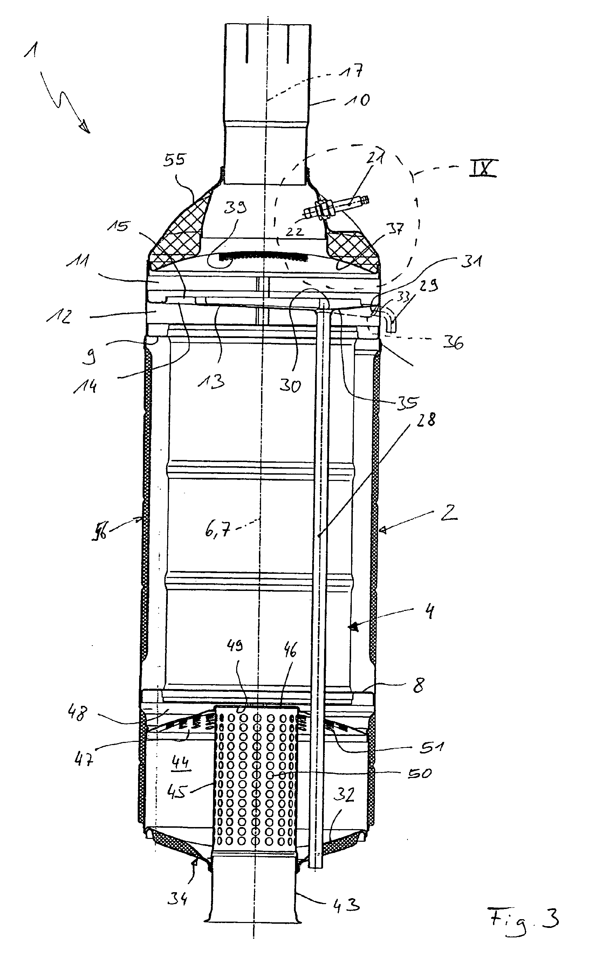

Gemäß den Figuren 2 und 3 kann das Austrittsrohr 10 gemäß einer bevorzugten Ausführungsform einen Trichter 19 aufweisen. Im Beispiel sind Austrittsrohr 10 und Trichter 19 separate Bauteile, die ineinander gesteckt sind. Insoweit geht hier das Austrittsrohr 10 in den Trichter 19 über. Der Trichter 19 befindet sich dabei innerhalb des Gehäuses 2 und weitet sich in Richtung zur Austrittskammer 11 hin auf. Der Trichter 19 kann dabei auch einen integralen Bestandteil des Austrittsrohrs 10 bilden oder wie hier an das Austrittsrohr 10 angebaut sein. Der Trichter 19 besitzt an seinem der Austrittskammer 11 zugewandten Ende eine Querschnittsfläche 20. Vorzugsweise ist der geschlossene Bereich 16 des Separationsboden 13 so dimensioniert, dass seine Fläche auch größer ist als die Querschnittsfläche 20 des Trichters 19 an dem der Austrittskammer 11 zugewandten Ende. Somit liegt eine axiale Projektion dieser Querschnittsfläche 20 des Trichters 19 vollständig innerhalb des geschlossenen Bereichs 16.

Gemäß den Figuren 3 und 9 kann die Abgasbehandlungseinrichtung 1 mit einem Sensor 21 ausgestattet sein. Bspw. kann es sich hierbei um einen NOX-Sensor handeln. Grundsätzlich kann es sich auch um einen λ-Sensor oder um einen Temperatursensor oder dergleichen handeln. Zweckmäßig ist der Sensor 21 im Bereich des Austrittsrohrs 10, hier im Bereich des Trichters 19 am Gehäuse 2 angebracht. Die Anbringung erfolgt dabei so, dass der Sensor 21 zwischen den nicht näher bezeichneten Enden des Trichters 19 in das Innere des Trichters 19 vorsteht. Erkennbar ragt ein vorstehendes Ende 22 des Sensors 21 in das Innere des Trichters 19 hinein. Zur Befestigung des Sensors 21 am Gehäuse 2 wird bei der hier vorgestellten Ausführungsform eine Sensorbuchse 23 verwendet. Diese Sensorbuchse 23 durchdringt einerseits eine Gehäusewand 24 und andererseits eine Trichterwand 25, jeweils in einer entsprechenden, hier nicht näher bezeichneten Öffnung. Durch die Sensorbuchse 23 hindurch kann nun der Sensor 21 in das Innere des Trichters 19 hineinragen. Die Sensorbuchse 23 kann bspw. mittels einer hier nicht dargestellten Schweißnaht an der Gehäusewand 24 und/oder an der Trichterwand 25 dicht befestigt sein. Bei der hier vorgestellten, vorteilhaften Ausführungsform ist die Sensorbuchse 23 in einem im Inneren des Trichters 19 angeordneten Abschnitt mit einer Außennut 26 ausgestattet, die bzgl. einer Längsmittelachse 27 der Sensorbuchse 23 ringförmig umläuft. Der Sensor 21 ist koaxial zur Längsmittelachse 27 orientiert und in die Sensorbuchse 23 eingesteckt.

Gemäß Fig. 3 weist die hier vorgestellte Abgasbehandlungseinrichtung 1 zweckmäßig zumindest ein Ablaufrohr 28 bzw. 29 auf. Im Beispiel sind zwei Ablaufrohre 28, 29 dargestellt, die zweckmäßig nur alternativ realisiert werden. Grundsätzlich ist jedoch auch eine kumulative Realisierung denkbar. Das jeweilige Ablaufrohr 28, 29 ist einerseits mit einer Ablauföffnung 30 bzw. 31 verbunden, während es andererseits durch eine Gehäusewand 32 bzw. 33 hindurchgeführt und bzgl. des Gehäuses 2 nach außen geführt ist. Dabei ist klar, dass je nach Realisierung der Ablaufrohre 28, 29 auch die Ablauföffnungen 30, 31 sowie die Wanddurchführungen 32, 33 alternativ oder kumulativ realisiert werden. Das eine Ablaufrohr 28 ist distal zum Austrittsrohr 11 axial aus dem Gehäuse 2 herausgeführt, und zwar insbesondere durch einen Endboden 34 hindurch, der sich an einem vom Austrittsrohr 10 entfernten Ende des Gehäuses 2 befindet. Die Gehäusewand 32, durch welche dieses Ablaufrohr 28 durch das Gehäuse nach außen geführt ist, ist dabei durch besagten Endboden 34 gebildet. Das andere hier exemplarisch gezeigte Ablaufrohr 29 ist im Bereich des Separationsbodens 13 seitlich, also quer zur Längsmittelachse 17 des Gehäuses 2 aus dem Gehäuse 2 herausgeführt. Die Realisierung der hier gezeigten Ablaufrohre 28,29 kann vom zur Verfügung stehenden Einbauraum im Gehäuse 2 sowie von der Einbausituation der Abgasbehandlungseinrichtung 1 innerhalb der Abgasanlage bzw. am Fahrzeug abhängen. Bevorzugt wird dabei eine stehende oder hängende Positionierung des Gehäuses 2 im jeweiligen Einbauzustand der Abgasbehandlungseinrichtung 1. Bei einer stehenden oder hängenden Einbausituation erstreckt sich die Längsmittelachse 17 des Gehäuses 2 im Wesentlichen vertikal. Dabei soll eine stehende Anordnung auch dann noch vorliegen, wenn die Längsmittelachse 17 von der Vertikalrichtung mit einem Winkel von bis zu 45° abweicht.

Gemäß Fig. 3 ist das eine Ablaufrohr 28 geradlinig gestaltet. Insbesondere erstreckt es sich parallel zur Längsmittelachse 17, wobei es zweckmäßig zwischen den Elementeträgerrohren 4 durch das Gehäuse 2 hindurchgeführt ist. Insbesondere ist dieses Ablaufrohr 28 durch die Tragböden 8, 9 sowie durch den Zwischenboden 47 hindurchgeführt.

Zweckmäßig besitzt der Separationsboden 13 für die jeweilige Ablauföffnung 30 bzw. 31 eine Mulde 35 bzw. 36. Die Mulde 35 ist der Ablauföffnung 30 des einen Ablaufrohrs 28 zugeordnet, während die Mulde 36 der Ablauföffnung 31 des anderen Ablaufrohrs 29 zugeordnet ist. Die jeweilige Mulde 35, 36 ist im Einbauzustand der Abgasbehandlungseinrichtung 1 tiefliegend angeordnet, sodass Wasser, das sich an der der Austrittskammer 11 zugewandten Seite des Separationsbodens 13 sammelt, schwerkraftbedingt zur jeweiligen Mulde 35, 36 fließt und dort durch die jeweilige Ablauföffnung 30, 31 in das jeweilige Ablaufrohr 28, 29 eintritt und durch dieses aus dem Gehäuse 2 herausgeführt wird.

Entsprechend den Figuren 1 und 2, kann im Gehäuse 2 ein Trennboden 37 angeordnet sein, der die Austrittskammer 11 von einer Absorptionskammer 38 trennt. Der Trennboden 37 ist für Luftschall durchlässig ausgestaltet. Insbesondere kann er hierzu mit einer Perforation 39 versehen sein. In der in Fig. 4 wiedergegebenen Schnittdarstellung sind zwei perforierte Bereiche 40 erkennbar. In der Absorptionskammer 38 kann ein Schallschluckstoff 39 angeordnet sein. Zweckmäßig geht der Trichter 19 in den Trennboden 37 über. Insbesondere kann eine Einlassöffnung 41 des Trichters 19 am Trennboden 37 ausgebildet sein. Im Beispiel besitzt der Trennboden 37 einen Auszug 42, in den der Trichter 19 mit seinem aufgeweiteten Querschnitt 20 eingesteckt ist.

An einem vom Austrittsrohr 10 entfernten Ende weist das Gehäuse 2 ein Eintrittsrohr 43 auf. Bemerkenswert ist die hier vorgesehene koaxiale Ausrichtung des Eintrittsrohrs 43 zum Austrittsrohr 10. Das Eintrittsrohr 43 ragt in eine Expansionskammer 44 hinein, die im Gehäuse 2 angeordnet ist. In dieser Expansionskammer 44 weist das Eintrittsrohr 43 einen perforierten Endabschnitt 45 auf, der an seinem axialen Ende 46 geschlossen ist. Dabei kann das axiale Ende 46 des Eintrittsrohrs 43 durch einen Zwischenboden 47, der die Expansionskammer 44 von einer Verteilerkammer 48 trennt, verschlossen sein. Hierzu kann am Zwischenboden 47 insbesondere eine Mulde 49 ausgeformt sein, die eine geschlossene Oberfläche besitzt. Die Mulde 49 ist so an den Querschnitt des Eintrittsrohrs 43 bzw. des perforierten Endabschnitts 45 angepasst, dass besagter Endabschnitt 45 mit seinem axial offenen Ende 46 in die Mulde 49 eintauchen kann und dadurch axial verschlossen wird.

Der perforierte Endabschnitt 45 besitzt eine Perforation 50, die so ausgestaltet ist, dass das Expansionsrohr 43 mit der Expansionskammer 44 fluidisch verbunden ist. Insbesondere sind die Öffnungen der Perforation 50 deutlich größer dimensioniert als die Öffnungen der Perforation 39. Auch der Zwischenboden 47 ist mit einer Perforation 51 ausgestattet, die so dimensioniert ist, dass sie die Expansionskammer 44 mit der Verteilerkammer 48 fluidisch verbindet.

Der Endboden 34, durch den das Einlassrohr 43 in die Expansionskammer 44 hineinragt, ist bei der hier gezeigten, speziellen Ausführungsform doppelwandig ausgeführt und umfasst dementsprechend eine Außenschale 52 sowie eine Innenschale 53. Insbesondere kann zwischen Außenschale 52 und Innenschale 53 eine Isolationsfüllung 54 angeordnet sein, die thermisch und/oder akustisch isolierend wirkt. Im Unterschied dazu kann ein im Bereich des Austrittsrohrs 10 angeordneter Endboden 55 einfach ausgeführt sein. Die Isolationswirkung wird hier durch die Absorptionskammer 38 realisiert bzw. durch den darin eingebrachten Schallschluckstoff 39.

Zwischen den Endböden 34 und 55 besitzt das Gehäuse 2 einen Mantel 56, der bzgl. der Längsmittelachse 17 in Umfangsrichtung umläuft. Er kann, wie hier dargestellt, zumindest abschnittsweise doppelwandig ausgestaltet sein und dementsprechend eine Außenhaut 57, eine Innenhaut 58 und ggf. eine zwischen Außenhaut 57 und Innenhaut 58 angeordnete Isolationsschicht 59 aufweisen, die thermisch und/oder akustisch isolierend bzw. dämpfend wirkt.

Die erfindungsgemäße Abgasbehandlungseinrichtung 1 arbeitet wie folgt:

Im Betrieb der Abgasanlage tritt Abgas über das Eintrittsrohr 43 in das Gehäuse 2 ein. Durch die Perforation 5 des Endabschnitts 45 gelangt das Abgas in die Expansionskammer 44. Dabei kommt es zu einer schalldämpfenden Wirkung. Von der Expansionskammer 44 gelangt das Abgas durch die Perforation 51 des Zwischenbodens 47 in die Verteilerkammer 48, von wo aus das Abgas parallel durch die beiden Elementeträgerrohre 4 und darin hintereinander durch die darin vorgesehenen Abgasbehandlungselemente 3 hindurch strömt. Danach gelangt das Abgas in die Sammelkammer 12 und über die Durchlassöffnungen 14 des Separationsbodens 13 in die Austrittskammer 11. Von dort aus kann Luftschall durch die Perforation 39 in die Absorptionskammer 38 gelangen. Das Abgas tritt über den Trichter 19 in das Austrittsrohr 10 und darüber aus dem Gehäuse 2 aus.

Bei der gezeigten Einbaulage kann Wasser über das Austrittsrohr 10 in das Gehäuse 2 gelangen. Dabei kann das Wasser z. B. entlang der Wand des Austrittsrohrs 10 nach unten abfließen und von einem stirnseitigen Rand des Austrittsrohrs 10 nach unten abtropfen. Dabei trifft das abtropfende Wasser auf den geschlossenen Bereich 16 des Separationsbodens 13. Die in die Austrittskammer 11 vorstehenden Kragen 15 verhindern dabei, dass Wasser durch die Durchlassöffnungen 14 in die Sammelkammer 12 und von dort aus z. B. zu den Lagermatten 5 gelangt. Das Wasser sammelt sich am Separationsboden 13 und fließt schwerkraftbedingt zur jeweiligen Mulde 35 bzw. 36 und - wie bereits weiter oben erläutert - durch die jeweilige Auslassöffnung 30, 31 und durch das jeweilige Auslassrohr 28, 29 aus dem Gehäuse 2 heraus.

Entsprechendes gilt auch für Wasser, das vom Austrittsrohr 10 zunächst zur Wandung des Trichters 19 gelangt und am stirnseitigen Ende des Trichters 19 in Richtung Separationsboden 13 abtropft und auch dort wieder den geschlossenen Bereich 16 trifft. Wasser, das entlang des Trichters 19 abfließt, kann im Bereich des Sensors 21 auf die Sensorbuchse 23 treffen. Das Wasser kann jedoch nicht entlang der Sensorbuchse 23 bis zum Sensor 21 gelangen, da es zuvor in die Außennut 26 eintritt und über diese nach unten abgeführt wird und daraus wieder abtropfen bzw. entlang der Trichterwand 25 weiter abfließen kann.

## Patentansprüche

1. Abgasbehandlungseinrichtung für eine Abgasanlage einer Brennkraftmaschine, insbesondere eines Straßenfahrzeugs,
- mit einem Gehäuse (2), in dem zumindest ein Abgasbehandlungselement (3) angeordnet und mittels einer Lagermatte (5) gelagert ist,
- mit einem Austrittsrohr (10), das mit einer im Gehäuse (2) gebildeten Austrittskammer (11) fluidisch verbunden ist,
- mit einem Separationsboden (13), der im Gehäuse (2) angeordnet ist und die Austrittskammer (11) von einer Sammelkammer (12) trennt, **dadurch gekennzeichnet, daß** der Separationsboden (13) mehrere Durchlassöffnungen (14) aufweist, durch die die Austrittskammer (11) mit der Sammelkammer (12) fluidisch verbunden ist und die jeweils durch einen in die Austrittskammer (11) vorstehenden Kragen (15) eingefasst sind.

2. Abgasbehandlungseinrichtung nach Anspruch 1,
**dadurch gekennzeichnet,**
**dass** der Separationsboden (13) axial fluchtend zum Austrittsrohr (10) einen geschlossenen Bereich (16) aufweist, dessen Fläche größer ist als die Querschnittsfläche (18) des Austrittsrohrs (10) an einem dem Separationsboden (13) zugewandten Ende.

3. Abgasbehandlungseinrichtung nach Anspruch 1 oder 2,
**dadurch gekennzeichnet,**
- **dass** das Austrittsrohr (10) über einen sich zur Austrittskammer (11) aufweitenden, im Gehäuse (2) angeordneten Trichter (19) in die Austrittskammer (11) übergeht,
- wobei insbesondere vorgesehen sein kann, dass der Separationsboden (13) axial fluchtend zum Austrittsrohr (10) einen geschlossenen Bereich (16) aufweist, dessen Fläche größer ist als die Querschnittsfläche (20) des Trichters (19) an dessen der Austrittskammer (11) zugewandten Ende.

4. Abgasbehandlungseinrichtung nach einem der Ansprüche 1 bis 3,
**dadurch gekennzeichnet,**
**dass** ein Sensor (21), insbesondere ein NOX-Sensor, im Bereich des Austrittsrohrs (10) oder im Bereich des Trichters (19) am Gehäuse (2) angebracht ist, sodass der Sensor (21) zwischen den Enden des Austrittsrohrs (10) oder zwischen den Enden des Trichters (19) in das Innere des Austrittsrohrs (10) oder in das Innere des Trichters (19) vorsteht.

5. Abgasbehandlungseinrichtung nach Anspruch 4,
**dadurch gekennzeichnet,**
**dass** der Sensor (21) mittels einer Sensorbuchse (23) am Gehäuse (2) befestigt ist, die insbesondere eine Gehäusewand (24) und eine Austrittsrohrwand oder eine Trichterwand (25) durchdringt, wobei der Sensor (21) durch die Sensorbuchse (23) hindurch in das Innere des Austrittsrohrs (10) oder des Trichters (19) hineinragt, wobei insbesondere vorgesehen sein kann, dass die Sensorbuchse (23) im Inneren des Austrittsrohrs (10) oder im Inneren des Trichters (19) eine ringförmig umlaufende Außennut (26) aufweist.

6. Abgasbehandlungseinrichtung nach einem der Ansprüche 1 bis 5,
**dadurch gekennzeichnet,**
- **dass** zumindest ein Ablaufrohr (28, 29) vorgesehen ist, das einerseits mit einer im Separationsboden (13) ausgebildeten Ablauföffnung (30, 31) verbunden ist und andererseits durch eine Gehäusewand (32, 33) hindurch nach außen geführt ist,
- wobei insbesondere vorgesehen sein kann, dass das Ablaufrohr (28) distal zum Austrittsrohr (10) axial aus dem Gehäuse (2) herausgeführt ist oder dass das Ablaufrohr (29) im Bereich des Separationsbodens (13) seitlich aus dem Gehäuse (2) herausgeführt ist.

7. Abgasbehandlungseinrichtung nach Anspruch 6,
**dadurch gekennzeichnet,**
**dass** die Ablauföffnung (30, 31) in einer im Separationsboden (13) ausgebildeten Mulde (35, 36) angeordnet ist, die im Einbauzustand der Abgasbehandlungseinrichtung (1) tiefliegend angeordnet ist.

8. Abgasbehandlungseinrichtung nach einem der Ansprüche 1 bis 7,
**dadurch gekennzeichnet,**
- **dass** im Gehäuse (2) ein für Luftschall durchlässiger, insbesondere perforierter, Trennboden (37) angeordnet ist, der eine Absorptionskammer (38) von der Austrittskammer (11) trennt,
- wobei insbesondere vorgesehen sein kann, dass eine Einlassöffnung (41) des Austrittsrohrs (10) oder des Trichters (19) am Trennboden (37) ausgebildet ist.

9. Abgasbehandlungseinrichtung nach einem der Ansprüche 1 bis 8,
**dadurch gekennzeichnet,**
- **dass** ein Eintrittsrohr (43) in einer im Gehäuse (2) gebildeten Expansionskammer (44) einen axial geschlossenen, perforierten Endabschnitt (35) aufweist, dessen Perforation (50) das Eintrittsrohr (43) mit der Expansionskammer (44) fluidisch verbindet,
- wobei insbesondere vorgesehen sein kann, dass ein perforierter Zwischenboden (47) die Expansionskammer (44) von einer im Gehäuse (2) gebildeten Verteilerkammer (48) trennt, deren Perforation (51) die Expansionskammer (44) mit der Verteilerkammer (48) fluidisch verbindet.

10. Abgasbehandlungseinrichtung nach einem der Ansprüche 1 bis 9,
**dadurch gekennzeichnet,**
- **dass** mehrere Abgasbehandlungselemente (3) hintereinander angeordnet sind, sodass sie in Reihe durchströmbar sind,
- wobei insbesondere vorgesehen sein kann, dass zumindest ein Abgasbehandlungselement (3) in einem Elementeträgerrohr (4) angeordnet und mit der jeweiligen Lagermatte (5) gelagert ist,
- wobei insbesondere vorgesehen sein kann, dass das Elementeträgerrohr (4) an seinen Enden über je einen Tragboden (8, 9) im Gehäuse (2) gehalten ist,
- wobei insbesondere vorgesehen sein kann, dass zumindest zwei Abgasbehandlungselemente (3) nebeneinander angeordnet sind, sodass sie parallel durchströmbar sind,
- wobei insbesondere vorgesehen sein kann, dass zumindest zwei Elementeträgerrohre (4) nebeneinander angeordnet sind, sodass sie parallel durchströmbar sind.

## Claims

1. An exhaust gas treatment device for an exhaust system of an internal combustion engine, in particular of a road vehicle,
- with a housing (2), in which at least one exhaust gas treatment element (3) is arranged and mounted by means of a bearing mat (5),
- with an outlet pipe (10), which is fluidically connected to an outlet chamber (11) formed in the housing (2),
- with a separation bottom (13), which is arranged in the housing (2) and separates the outlet chamber (11) from a collecting chamber (12),
**characterized in that** the separation bottom (13) comprises multiple passage openings (14), through which the outlet chamber (11) is fluidically connected to the collection chamber (12) and which are each surrounded by a collar (15) projecting into the outlet chamber (11).

2. The exhaust gas treatment device according to claim 1,
**characterized in that**
the separation bottom (13) comprises axially aligned with the outlet pipe (10) a closed region (16), the area of which is larger than the cross-sectional area (18) of the outlet tube (10) on an end facing the separation bottom (13).

3. The exhaust gas treatment device according to claim 1 or 2,
**characterized**
- **in that** the outlet pipe (10) merges into the outlet chamber (11) via a funnel (19) which expands towards the outlet chamber (11) and is arranged in the housing (2),
- wherein it can be provided in particular that the separation bottom (13) axially aligned with the outlet pipe (10) comprises a closed region (16), the area of which is larger than the cross-sectional area (20) of the funnel (19) on the end of the latter facing the outlet chamber (11).

4. The exhaust gas treatment device according to any one of the claims 1 to 3,
**characterized**
**in that** a sensor (21), in particular a Nox sensor is attached to the housing (2) in the region of the outlet pipe (10) or in the region of the funnel (19) so that the sensor (21) between the ends of the outlet pipe (10) or between the ends of the funnel (19) projects into the interior of the outlet pipe (10) or into the interior of the funnel (19).

5. The exhaust gas treatment device according to claim 4,
**characterized**
**in that** the sensor (21) is fastened to the housing (2) by means of a sensor bush (23), which in particular penetrates a housing wall (24) and an outlet pipe wall or a funnel wall (25), wherein the sensor (21) projects through the sensor bush (23) into the interior of the outlet pipe (10) or of the funnel (19), wherein it can be provided in particular that the sensor bush (23) has an annular circumferential outer groove (26) in the interior of the outlet pipe (10) or in the interior of the funnel (19).

6. The exhaust gas treatment device according to any one of the claims 1 to 5,
**characterized**
- **in that** at least one drain pipe (28, 29) is provided, which on the one hand is connected to a drain opening (30, 31) formed in the separation bottom (13) and on the other hand is led through a housing wall (32, 33) to the outside,
- wherein it can be provided in particular that the drain pipe (28) is axially led out of the housing (2) distally to the outlet pipe (10) or that the drain pipe (29) in the region of the separation bottom (13) is laterally led out of the housing (2).

7. The exhaust gas treatment device according to claim 6,
**characterized**
**in that** the drain opening (30, 31) is arranged in a trough (35, 36) formed in the separation bottom (13) which in the installation state of the exhaust gas treatment device (1) is arranged lying low.

8. The exhaust gas treatment device according to any one of the claims 1 to 7,
**characterized**
- **in that** in the housing (2) an in particular perforated separating bottom (37) that is permeable to air-borne sound is arranged, which separates an absorption chamber (38) from the outlet chamber (11),
- wherein it can be provided in particular that an inlet opening (41) of the outlet pipe (10) or of the funnel (19) is formed on the separating bottom (37).

9. The exhaust gas treatment device according to any one of the claims 1 to 8,
**characterized**
- **in that** an inlet pipe (43) in an expansion chamber (44) formed in the housing (2) comprises an axially closed, perforated end portion (35), the perforation (50) of which fluidically connects the inlet pipe (43) to the expansion chamber (44),
- wherein it can be provided in particular that a perforated intermediate bottom (47) separates the expansion chamber (44) from a distribution chamber (48) formed in the housing (2), the perforation (51) of which fluidically connects the expansion chamber (44) to the distribution chamber (48).

10. The exhaust gas treatment device according to any one of the claims 1 to 9,
**characterized**
- **in that** multiple exhaust gas treatment elements (3) are arranged one behind the other, so that they can be subjected to a through-flow in series,
- wherein it can be provided in particular that at least one exhaust gas treatment element (3) is arranged in an element carrier tube (4) and is mounted with the respective bearing mat (5),
- wherein it can be provided in particular that the element carrier tube (4) on its ends is held in the housing (2) via a support bottom (8, 9) each,
- wherein it can be provided in particular that at least two exhaust gas treatment elements (3) are arranged next to one another, so that they can be subjected to a through-flow in parallel,
- wherein it can be provided in particular that at least two element support tubes (4) are arranged next to one another so that they can be subjected to a through-flow in parallel.

## Revendications

1. Dispositif de traitement de gaz d'échappement pour une installation de gaz d'échappement d'un moteur à combustion interne, notamment d'un véhicule routier,
- comportant un logement (2), dans lequel au moins un élément de traitement de gaz d'échappement est disposé et positionné au moyen d'un panneau standard (5),
- comportant un tube de sortie (10), qui est reliée fluidiquement avec une chambre de sortie (11) formée dans le logement (2),
- comportant un fond de séparation (13), qui est disposé dans le logement (2) et sépare la chambre de sortie (11) une chambre collectrice (12),
**caractérisé en ce que** le fond de séparation (13) présente plusieurs ouvertures de passage (14), à travers lequel la chambre de sortie (11) est reliée fluidiquement avec la chambre collectrice (12) et qui sont respectivement bordées par un collier (15) dépassant à l'intérieur de la chambre de sortie (11).

2. Dispositif de traitement de gaz d'échappement selon la revendication 1,
**caractérisé en ce que**
le fonds de séparation (13) présente une zone fermée (16) s'alignant actuellement avec le tube de sortie (10), dont la surface est plus grande que la surface de section transversale (18) du tuyau de sortie (10) à une extrémité tournée vers le fond de séparation (13).

3. Dispositif de traitement de gaz d'échappement selon la revendication 1 ou 2,
**caractérisé en ce que**
- le tuyau de sortie (10) aboutit à la chambre de sortie (11) par l'intermédiaire d'une trémie (19) disposés dans le logement (2), élargie par rapport à la chambre de sortie (11),
- dans lequel il peut notamment être prévu que le fonds de séparation (13) présente une zone fermée (16) s'alignant actuellement avec le tube de sortie (10), dont la surface est plus grande que la surface de section transversale (20) de la trémie (19) à une extrémité tournée vers la chambre de sortie (11) de celle-ci.

4. Dispositif de traitement de gaz d'échappement selon une des revendications 1 à 3,
**caractérisé en ce qu'**
un capteur (21), notamment un capteur de NOX, est montée au niveau du tuyau de sortie (10) ou au niveau de la trémie (19) sur le logement (2), de telle sorte que le capteur (21) dépasse entre les extrémités du tuyau de sortie (10) ou entre les extrémités de la trémie (19) dans l'intérieur du tuyau de sortie (10) ou dans l'intérieur de la trémie (19).

5. Dispositif de traitement de gaz d'échappement selon la revendication 4,
**caractérisé en ce que**
le capteur (21) est fixé au moyen d'un manchon de capteur (23) sur le logement (2), qui traverse notamment une paroi de logements (24) ou une paroi de tuyau de sortie ou parfois de trémie (25), dans lequel le capteur (21) dépasse à travers de capteur (23) dans l'intérieur du tuyau de sortie (10) ou de la trémie (19), dans lequel il peut notamment être prévu que le manchon de capteur (23) présent à l'intérieur du tuyau de sortie (10) ou à l'intérieur de la trémie (19) une rainure extérieure (26) annuaire circonférentielle.

6. Dispositif de traitement de gaz d'échappement selon un des revendications 1 à 5,
**caractérisé en ce que**
- au moins un tuyau d'évacuation (28, 29) est prévu, qui est relié d'un côté à une ouverture d'évacuation (30, 31) conçue dans le fond de séparation (13) et d'un autre côté est guidée à travers une paroi de logement (32, 33) vers l'extérieur,
- dans lequel il peut notamment être prévu que le tuyau d'évacuation (28) soit guidé distalement par rapport au tuyau de sortie (10) axialement hors du logement (2) ou que le tuyau d'évacuation (29) soit guidé au niveau du fond de séparation (13) latéralement hors du logement (2).

7. Dispositif de traitement de gaz d'échappement selon la revendication 6,
**caractérisé en ce que**
l'ouverture d'évacuation (30, 31) est disposée dans un creux (35, 36) réalisé dans le fond de séparation (13), qui en l'état monté du dispositif de traitement de gaz d'échappement (1) est disposé situé en profondeur.

8. Dispositif de traitement de gaz d'échappement selon une des revendications 1 à 7,
**caractérisé en ce que**
- dans le logement (2) un fonde de séparation (37) perméable au bruit d'air, notamment perforé est disposé, qui sépare une chambre d'absorption (38) de la chambre de sortie (11),
- dans lequel il peut notamment être prévu qu'une ouverture d'admission (41) du tuyau de sortie (10) ou de la trémie (19) soit réalisée sur le fond de séparation (37).

9. Dispositif de traitement de gaz d'échappement selon une des revendications 1 à 8,
**caractérisé en ce que**
- un tuyau d'entrée (43) dans une chambre d'expansion (44) formée dans le logement (2) présente une portion d'extrémité (35) perforée, fermée axialement, dont la perforation (50) relie fluidiquement le tuyau d'entrée (43) avec la chambre d'expansion (44),
- dans lequel il peut notamment être prévu qu'un fond intermédiaire perforé (47) sépare la chambre d'expansion (44) d'une chambre de distributeur (48) formée dans le logement (2), dont la perforation (51) relie fluidiquement la chambre d'expansion (44) avec la chambre de distributeur (48).

10. Dispositif de traitement de gaz d'échappement selon une des revendications 1 à 9,
**caractérisé en ce que**
- plusieurs éléments de traitement de gaz d'échappement (3) sont disposés les uns derrière les autres, de sortent qu'ils puissent être traversés par un écoulement en série,
- dans lequel il peut notamment être prévu qu'au moins un élément de traitement de gaz d'échappement (3) soit disposé dans un tuyau porteur d'élément (4) et soit positionné avec le panneau standard respectif (5),
- dans lequel il peut notamment être prévu que le tuyau porteur d'élément (4) soit monté à ses extrémités par respectivement un fond porteur (8, 9) dans le logement (2),
- dans lequel il peut notamment être prévu qu'au moins deux éléments de traitement de gaz d'échappement (3) sont disposés côté à côté, de telle sorte qu'ils puissent être traversés par un écoulement parallèlement,
- dans lequel il peut notamment être prévu qu'au moins deux tuyaux porteurs d'éléments (4) sont disposés côté à côté, de telle sorte qu'ils puissent être traversés par un écoulement parallèlement.
